# EUROPÄISCHE PATENTANMELDUNG

(11) **EP 1 482 349 A1**
(43) Veröffentlichungstag der Anmeldung: **01.12.2004**
(21) Anmeldenummer: 04012284.8
(22) Anmeldetag: 25.05.2004
(51) Int. Cl.: G02B 27/09, G02B 27/14, H01S 3/08

(54) **Verfahren und Vorrichtung zur Verteilung der stromdichte eines Lichtstroms**

(30) Priorität: 26.05.2003 DE 10324111
(71) Anmelder: Usoskin, Olga, 37075 Göttingen (DE)
(72) Erfinder: Usoskin, Olga, 37075 Göttingen (DE)
(74) Vertreter: Patentanwälte Rehberg + Hüppe

(57) **Zusammenfassung**

Zur Verteilung der Stromdichte eines Eingangslichtstroms (11) wird dieser in mindestens zwei Lichtströme (12,13) aufgespalten, die verschiedene Querschnittsanteile des Eingangslichtstroms (11) umfassen, und es wird ein Ausgangslichtstrom (15) ausgegeben der aus zwei Teilströmen besteht, die jeweils einen Stromdichteanteil mindestens eines Lichtstroms (12,13) umfassen, und mit Hilfe einer Teilspiegelung an einer teilverspiegelten optischen Fläche (9) in einer Richtung koaxial überlagert werden. Zusätzlich wird mindestens ein weiterer Ausgangslichtstrom (17) ausgegeben der aus zwei weiteren Teilströmen besteht, die jeweils weitere Stromdichteanteile derselben Lichtströme (12,13) wie bei dem ersten Ausgangslichtstrom (15) umfassen, und durch dieselbe Teilspiegelung an der teilverspiegelten optischen Fläche (9) in einer weiteren Richtung koaxial überlagert werden.

## Beschreibung

Die Erfindung betrifft ein Verfahren zur Verteilung der Stromdichte eines Eingangslichtstroms mit den Merkmalen des Oberbegriffs des Patentanspruchs 1 sowie eine Vorrichtung zur Verteilung der Stromdichte eines Eingangslichtstroms mit den Merkmalen des Oberbergriffs des Patentanspruchs 7.

### STAND DER TECHNIK

Ein Verfahren nach dem Oberbegriff des Patentanspruchs 1 und eine Vorrichtung nach dem Oberbegriff des Patentanspruchs 7 sind aus der US 4,911,711 bekannt. Hier wird ein Eingangslichtstrom mit Gaußscher Verteilung seiner Stromdichte über seinen Querschnitt mit Hilfe von zwei vollspiegelnden optischen Flächen entlang von zwei parallel zu der optischen Achse des Eingangslichtstroms und parallel zueinander verlaufenden Trennebenen in drei Lichtströme aufgespalten, wobei jede der beiden vollspiegelnden optischen Flächen einen Lichtstrom um 90° umlenkt und der mittlere Lichtstrom ohne Umlenkung zwischen den beiden vollspiegelnden optischen Flächen hindurchläuft. Die beiden umgelenkten Lichtströme werden dann mit dem nicht umgelenkten Lichtstrom mit Hilfe von zwei Strahlteilern koaxial überlagert. An der teilverspiegelten optischen Fläche jedes der Strahlteiler wird der transmittierte Stromdichtanteil des nicht umgelenkten Lichtstroms mit dem reflektierten Stromdichteanteil eines der umgelenkten Lichtströme überlagert. Der ausgegebene Ausgangslichtstrom umfasst demnach Teilströme aller drei Lichtströme. Bis zur Zusammenführung mit dem durchgehenden Lichtstrom werden die umgelenkten Lichtströme jeweils viermal gespiegelt, so dass sie insgesamt gegenüber dem durchgehenden Lichtstrom nur seitlich verschoben, nicht aber seitenverkehrt sind. Durch das koaxiale Zusammenführen der Lichtströme wird die Stromdichte des Eingangslichtstroms im Sinne einer Homogenisierung der Verteilung der Stromdichte bei dem Ausgangslichtstrom umverteilt. Der Lichtstromverlust bei der Durchführung des bekannten Verfahrens mit der bekannten Vorrichtung ist relativ hoch, weil an jedem Strahlteiler, der zum Zusammenführen von zwei Lichtströmen verwendet wird, Teilströme beider Lichtströme verworfen werden. Konkret sind dies jeweils die an der teilverspiegelten optischen Oberfläche reflektierten Stromdichteanteile des durchgehenden Lichtstroms und die transmittierten Stromdichteanteile der umgelenkten Lichtströme.

Aus der DE 197 24 060 C2 sind ebenfalls ein Verfahren und eine Vorrichtung zur Verteilung der Stromdichte eines Eingangslichtstroms bekannt, mit denen eine Gaußsche Verteilung der Stromdichte eines Laserstrahls homogenisiert werden soll. Der Eingangslichtstrom des Laserstrahls wird dazu von einem Strahlteiler in zwei Teilströme aufgeteilt, die jeweils Stromdichteanteile von der gesamten Querschnittsfläche des Eingangslichstroms aufweisen. Der von der teilverspiegelten optischen Fläche des Strahlteilers reflektierte Teilstrom wird mit Hilfe von reflektierenden und ggf. auch brechenden optischen Elementen umgeformt, wobei er zunächst in zwei Lichtströme aufgespalten wird, anschließend jeder Lichtstrom durch Spiegelungen seitenverkehrt wird und dann die seitenverkehrten Lichtströme wieder nebeneinander zusammengefasst werden. Der derart umgeformte reflektierte Teilstrom wird auf der Rückseite desselben Strahlteilers, der den Eingangslichtstrom in die Teilströme aufgespalten hat, mit dem nicht reflektierten Teilstrom überlagert. Da der umgeformte Teilstrom ein Minimum im Bereich der Strahlmitte hat, während der transmittierte Teilstrom die Gaußsche Verteilung der Stromdichte mit einem Maximum im Bereich der Strahlmitte aufweist, ist das Ergebnis der Überlagerung ein bezüglich der Verteilung seiner Stromdichte homogenisierte Ausgangslichtstrom. Allerdings ist der Lichtstromverlust auch hier recht groß, da der Strahlteiler bei der Überlagerung des umgeformten Teilstroms mit dem transmittierten Teilstrom einen Stromdichteanteil des umgeformten Teilstroms durchlässt, der nicht mehr nutzbar ist.

Aus der DE 36 45 001 C2 ist eine Strahlteilereinrichtung bekannt, die mit Hilfe von teilverspiegelten und vollspiegelnden optischen Flächen an parallel zueinander ausgerichteten transparenten planparallelen Platten einen Eingangslichtstrom in mehrere Lichtströme aufspaltet und diese Lichtströme parallel zueinander anordnet, so dass ein Ausgangslichtstrom mit verbreitertem Querschnitt entsteht.

Auch aus der DE 199 58 555 A1 ist eine Strahlteilerbaugruppe bekannt, die eine transparente planparallele Platte aufweist, die in unterschiedlichen Teilbereichen mit teilverspiegelten und vollspiegelnden optischen Flächen versehen ist.

Aus Gottfried Schröder, Technische Optik, 8. Auflage, Vogel Buchverlag, S. 43 ist ein Strahlteiler bekannt, dessen teilverspiegelte optische Fläche ein Feld aus einer Vielzahl nebeneinander angeordneter vollspiegelnder und volldurchlässiger Mikroflächen aufweist.

Aus Y. Kawamura et al.: "A simple optical device for generating square flat-top intensity irradiation from A Gaussian laser beam", Optics Communications, Vol. 48, No. 1, S. 44 ff. ist es bekannt, einen Eingangslichtstrom mit Gaußscher Verteilung seiner Stromdichte über seinen Querschnitt durch eine Prismenanordnung in vier Lichtströme aufzuspalten und gleichzeitig so umzulenken, dass sich die Querschnitte der Lichtströme überdecken. Dort wo sich die Querschnitte der Lichtströme überdecken ist die Verteilung der Stromdichte über den Gesamtquerschnitt relativ homogen. Die Lichtströme, die zu dem Ausgangslichtstrom zusammengefasst werden, verlaufen hier jedoch nicht koaxial sonder in unterschiedlichen Richtungen. Der zusammengefasste Ausgangslichtstrom ist daher stark divergent, und er weist außerhalb des Bereichs, in dem die Querschnitte der Lichtströme tatsächlich einander überdecken, keine Homogenisierung seiner Stromdichte auf.

### AUFGABE DER ERFINDUNG

Der Erfindung liegt die Aufgabe zugrunde, ein Verfahren nach dem Oberbegriff des Patentanspruchs 1 und eine Vorrichtung nach dem Oberbegriff des Patentanspruchs 7 aufzuzeigen, bei denen die Lichtstromverluste deutlich reduziert sind und bei denen dennoch die gewünschte Verteilung der Stromdichte nicht nur im Bereich einer Ebene erzielt und die Divergenz des Eingangslichtstroms nicht wesentlich erhöht wird.

### LÖSUNG

Xxxx Die Aufgabe der Erfindung wird durch ein Verfahren mit den Merkmalen des Patentanspruchs 1 und eine Vorrichtung mit den Merkmalen des Patentanspruchs 7 gelöst. Vorteilhafte Ausführungsformen des Verfahrens und der Vorrichtung sind in den Unteransprüchen 2 bis 6 bzw. 8 bis 17 beschrieben.

Der Unteranspruch 16 betrifft konkret eine Anordnung der neuen Vorrichtung in Verbindung mit einem Spiegel und der Unteranspruch 17 einen Laser oder Laserverstärker, der die neue Vorrichtung aufweist.

Soweit innerhalb der vorliegenden Patentanmeldung, insbesondere in den Patentansprüchen die Formulierung "mindestens ein(e) ..." verwendet ist, so soll dies nicht bedeuten, dass hier andere Formulierungen, bei denen auf das Wort "mindestens" verzichtet ist im Sinne von "ein(e) einzige(r/s) ..." auszulegen sind. Vielmehr soll jeder Hinweis auf "ein(e) ..." grundsätzlich nur bedeuten, dass "ein(e) ..." vorhanden ist, was das Vorhandensein "mehrerer ..." nicht ausschließt.

### BESCHREIBUNG DER ERFINDUNG

Bei dem neuen Verfahren werden mit einer Teilspiegelung zwei Ausgangslichtströme erzeugt, indem sowohl der reflektierte Teilstrom eines aus einer Richtung auf die entsprechende teilverspiegelte optische Fläche einfallenden Lichtstroms und der transmittierte Teilstrom eines aus einer anderen Richtung auf die teilverspiegelte optische Oberfläche einfallenden Lichtstroms als auch der transmittierte Teilstrom des einen und der reflektierte Teilstrom des anderen Lichtstroms jeweils zu einem Ausgangslichtstrom überlagert werden. Durch die Teilspiegelung entstehen damit keine nennenswerten Lichtstromverluste mehr. Alle reflektierten und transmittierten Teilströme des einfallenden Eingangslichtstroms werden voll genutzt. Gleichzeitig werden durch die Teilspiegelung jeweils Teilströme unterschiedlicher Lichtströme überlagert, so dass sie in der Summe bei dem jeweiligen Ausgangslichtstrom eine andere, d.h. üblicherweise eine homogenisierte Verteilung der Stromdichte ergeben.

Die beiden Ausgangslichtströme, die bei derselben Teilspiegelung erzeugt werden, können getrennt voneinander ausgegeben werden. So kann gleichzeitig die Funktion einer Homogenisierung der Verteilung der Stromdichte und einer Strahlteilung des Eingangslichtstroms in zwei Teilstrahlen mit dieser homogenisierten Verteilung der Stromdichte erreicht werden. Es ist aber auch möglich, die beiden Ausgangslichtströme von der Teilspiegelung in parallelen Richtungen nebeneinander auszurichten, um einen zusammengefassten Ausgangslichtstrom auszubilden. Bei genauer Ausrichtung der beiden Ausgangslichtströme weist der zusammengefasste Ausgangslichtstrom eine geschlossene homogene Verteilung seiner Stromdichte über seinen Querschnitt auf. Die Divergenz des zusammengefassten Ausgangslichtstroms ist dabei allenfalls unwesentlich größer als diejenige des Eingangslichtstroms.

Die Lichtströme, in die der Eingangslichtstrom bei dem neuen Verfahren vor der Ausbildung der Ausgangslichtströme aus ihren Teilströmen aufgespalten wird, können durch Spiegelungen erzeugt werden, die jeweils nur den Querschnittsanteil eines Lichtstroms an dem Eingangslichtstrom erfassen. Die Lichtströme werden so einzeln von dem Eingangslichtstrom abgespalten. Bei dem dem Eingangslichtstrom verbleibenden Rest kann es sich um einen weiteren Lichtstrom handeln.

Die Spiegelung, mit der zwei Lichtströme aufgespalten werden, kann an derselben teilverspiegelten optischen Fläche erfolgen, wie die Teilspiegelung, mit der die Teilströme dieser Lichtstrahlen in der Folge wieder überlagert werden. Das Aufspalten der Lichtströme kann aber auch mit einer oder mehreren weiteren voll- oder teilverspiegelten optischen Flächen erfolgen.

Es ist bevorzugt, wenn jeder der Lichtströme bezogen auf die Gesamtsquerschnittsfläche des Eingangslichtstroms einen gleichen Querschnittsanteil umfasst. Durch das Zusammenführen von Teilströmen der Lichtströme mit gleichen Querschnittsflächen wird die Homogenisierung der Verteilung der Stromdichte bei den Ausgangslichtströmen vereinfacht.

Weiterhin ist es bevorzugt, wenn der Eingangslichtstrom in n-Lichtströme aufgespalten wird, wobei n eine gerade ganze Zahl ist. Eine gerade ganze Zahl von Lichtströmen ist deshalb bevorzugt, weil mit jeder Teilspiegelung Teilströme von zwei einfallenden Lichtströmen überlagert werden.

Bei bevorzugten Ausführungsformen des neuen Verfahrens werden Teilströme von n-Lichtströmen zu n-Ausgangslichtströmen überlagert, die jeweils einen Teilstrom von jedem Lichtstrom umfassen.

Weiterhin ist es bevorzugt, wenn die zu den Ausgangslichtströmen überlagerten Teilströme gleich große Lichtstromanteile von jedem Lichtstrom aufweisen. Konkret kann jeder Teilstrom der zu einem Ausgangslichtstrom überlagert wird, jeweils einen Stromdichteanteil von 1/2^{m} eines der Lichtströme umfassen, wobei m eine ganze Zahl ist. Diese Forderung impliziert, dass die Anzahl der Lichtströme gleich 2^{m} ist. Kleinere Abweichungen von diesen Vorgaben und Unterschiede der Lichtstromanteile von den einzelnen Lichtströmen bei den zu einem Ausgangslichtstrom überlagerten Teilströmen, die sich z.B. durch (unterschiedliche) intrinsische Lichtstromverluste in den eingesetzten optischen Elementen ergeben, sind bis in die Größenordnung von einigen Prozent unschädlich.

Da bei dem neuen Verfahren Teilströme überlagert werden, die Lichtstromanteile von unterschiedlichen Lichtströmen umfassen, wird keine Seitenverkehrung der Verteilung der Stromdichte der einzelnen Lichtströme benötigt, um eine Homogenisierung der Ausgangslichtströme zu erreichen. Vielmehr beruht der homogenisierende Effekt des neuen Verfahrens auf einer Aufspaltung des Eingangslichtstroms in Lichtströme und auf einer Zusammenführung der senkrecht zu ihrer Trennebene verschobenen und damit zur Überlappung gebrachten Lichtströme.

Der Verzicht auf eine Seitenverkehrung bei dem neuen Verfahren schlägt sich darin nieder, dass sich die Anzahl von Spiegelungen einschließlich jeder Spieglung an einer teilverspiegelten optischen Fläche bei den jeweils miteinander überlagerten Teilströmen nicht oder um eine ganze gerade Zahl unterscheidet.

Bei dem neuen Verfahren können die optischen Wege der Teilströme, die miteinander überlagert werden, auf eine vorbestimmte Längendifferenz einschließlich null eingestellt werden. Mit der Einstellbarkeit der Längendifferenz können unterschiedliche Ziele verfolgt werden. Bei einer kurzen Kohärenzlänge des Eingangslichtstrom kann durch eine darüber hinaus gehende Längendifferenz der optischen Wege der Teilströme eine Interferenz der Teilströme nach ihrer Zusammenführung verhindert werden, die möglich ist, wenn die Teilströme im Sinne einer Überlagerung überlagert werden. Mit der Längendifferenz kann aber auch die effektive Pulsdauer eines Ausgangslichtstrahls bei einem gepulsten Eingangslichtstrom mit fester Pulsdauer variiert werden, wobei die minimale Pulsdauer des Ausgangslichtstroms, die der Pulsdauer des Eingangslichtstroms entspricht, bei einer Längendifferenz von null erreicht wird. Jede Längendifferenz ungleich null führt zu einer Ausdehnung der effektiven Pulsdauer der beiden aus der Zusammenführung der Teilströme resultierenden Ausgangslichtströme.

Das neue Verfahren kann in Bezug auf einen Eingangslichtstrom auch mehrfach hintereinander ausgeführt werden, wobei dann mindestens ein Ausgangslichtstrom einer vorhergehenden Durchführung des Verfahrens als Eingangslichtstrom bei einer nachfolgenden Durchführung des Verfahrens verwendet wird. Der als Eingangslichtstrom bei der nachfolgenden Durchführung des Verfahrens verwendete Ausgangslichtstrom kann ein einzelner Ausgangslichtstrom oder auch ein zusammengefasster Ausgangslichtstrom sein.

Bei zwei aufeinanderfolgenden Durchführungen des Verfahrens kann der jeweilige Eingangslichtstrom entlang parallel oder senkrecht zueinander verlaufender Trennebenen aufgespalten werden. Bei parallel zueinander verlaufenden Trennebenen sollte sich der Abstand der Trennebenen bei der nachfolgenden Durchführung des Verfahrens von dem Abstand der Trennebenen bei der vorhergehenden Durchführung des Verfahrens beispielsweise um einen Faktor **2** bzw. ½ unterscheiden oder die Trennebenen bei den aufeinanderfolgenden Durchführungen des Verfahrens sollten beispielsweise um ihren halben Abstand parallel zueinander versetzt sein, um die Homogenisierung der Verteilung der Stromdichte mit der nachfolgenden Durchführung des Verfahrens im Fall paralleler Trennebenen zu optimieren. Bei senkrecht zueinander verlaufenden Trennebenen sollten sich die jeweils mittleren Trennebenen auf der optischen Achse des Eingangslichtstroms schneiden.

Eine besonders bevorzugte Ausführungsform des neuen Verfahrens besteht darin, dass es innerhalb des Resonators eines Lasers oder eines Laserverstärkers durchgeführt wird. Bei der Erzeugung eines Laserstrahls mit dem Laser bzw. Laserverstärker wird so von vornherein für eine Homogenisierung der Verteilung der Stromdichte des Laserstrahls über seinen Querschnitt gesorgt, so dass auf eine anschließende Durchführung des Verfahrens außerhalb des Lasers bzw. Laserverstärkers an dem daraus austretenden Laserstrahl verzichtet werden kann.

Zu den Details der neuen Vorrichtung kann auf die vorangehende Beschreibung des neuen Verfahrens weitgehend verwiesen werden. Im Folgenden wird jedoch auf die besonders vorrichtungsspezifischen Merkmale der neuen Vorrichtung eingegangen werden, die hierdurch noch nicht abgedeckt sind.

Bei der neuen Vorrichtung ist"Lichtstromausgabe" eine funktionelle Angabe, die nicht ausschließen soll, dass die Vorrichtung umgedreht und der Eingangslichtstrom dort eingeleitet wird, wo vorher ein Ausgangslichtstrom ausgetreten ist. Insbesondere die Ausführungsformen der neuen Vorrichtung, bei denen die Lichtstromausgabe einen zusammengefassten Ausgangslichtstrom ausgibt, sind in Ihrer Funktion in aller Regel vollkommen symmetrisch, so dass es unerheblich ist, wo der Eingangslichtstrom eingeleitet wird, um am anderen, hier als Lichtstromausgabe bezeichneten Ende der Vorrichtung einen homogenisierten Ausgangslichtstrom zu erhalten. Es ist somit auch möglich, einen Ausgangslichtstrom der neuen Vorrichtung mit einem Spiegel zurück in seine Lichtstromausgabe zu lenken, wobei er dann einen neuen Eingangslichtstrom darstellt, der in der Vorrichtung erneut nach dem neuen Verfahren behandelt und dann an ihrem anderen Ende als neuer Ausgangslichtstrom wieder ausgegeben wird. Das neue Verfahren kann demnach auch mit einer Anordnung aus einer neuen Vorrichtung und einem Spiegel mehrfach hintereinander an einem Eingangslichtstrom ausgeführt werden.

Um unerwünschte Interferenzen der mit dem Strahlteiler überlagerten Teilstrahlen zu unterdrücken, kann die neue Vorrichtung mindestens einen polarisierenden oder teilpolarisierenden Strahlteiler aufweisen.

Eine andere Maßnahme zur Unterdrückung unerwünschter Interferenzen der überlagerten Teilstrahlen ist es, einen Strahlteiler zu verwenden, dessen teilverspiegelte optische Fläche ein Feld aus einer Vielzahl nebeneinander angeordneter vollspiegelnder und volldurchlässiger Mikroflächen aufweist. Beim Zusammenführen der Teilströme der beiden auf einen solchen Strahlteiler einfallenden Lichtströme in zwei unterschiedlichen Richtungen werden die Teilströme nicht in gleichen Volumina miteinander überlagert, sondern in parallelen Bereichen nebeneinander angeordnet, die auch bei einer geringen Divergenz der Teilströme keine praktisch relevante Überdeckung aufweisen. Dies hilft, ungewollte Interferenzen der überlagerten Teilströme zu verhindern.

Bei besonders bevorzugten Ausführungsformen der neuen Vorrichtung sind mehrere optische Flächen, insbesondere mindestens eine teilverspiegelte optische Fläche und eine vollspiegelnde optische Fläche, parallel zueinander ausgerichtet. Es können auch alle Teilspiegel in optischen Flächen und alle vollspiegelnden optischen Flächen parallel zueinander ausgerichtet sein. Die optischen Flächen sind in Bezug auf die optische Achse des Eingangslichtstroms geneigt orientiert, wobei der Neigungswinkel zur Einstellung der Apertur der neuen Vorrichtung in Bezug auf den Eingangslichtstrom genutzt werden kann.

Weiterhin ist es besonders bevorzugt, wenn die neue Vorrichtung mindestens eine teil- oder vollspiegelnde optische Fläche aufweist, die ein Teilbereich einer ebenen optischen Fläche ist, die sich selbst über die Querschnittsanteile an dem Eingangslichtstrom von mehreren Lichtströmen erstreckt. Die ebene optische Fläche kann sich konkret über die Querschnittsanteile sämtlicher Lichtströme und auch aller Teil- und Ausgangslichtströme erstrecken. Typischerweise ist die ebene optische Fläche eine Oberfläche einer planparallelen transparenten Platte, die zwei ebene optische Flächen mit einander entsprechender Ausdehnung aufweist.

Die teil- oder vollspiegelnden optischen Flächen der neuen Vorrichtung können als Beschichtungen von Teilbereichen der ebenen optischen Fläche mit unterschiedlichen Reflektionskoeffizienten vorgesehen sein. In den Teilbereichen, in denen die ebene optische Fläche keine teil- oder vollspiegelnde optische Fläche ausbildet, aber dennoch Lichtströme durch sie hindurchtreten, ist sie vorzugsweise mit einer Antireflexschicht vergütet.

Die teilverspiegelten und vollspiegelnden optischen Flächen der neuen Vorrichtung können an einer einzigen planparallelen transparenten Platte vorgesehen sein, wobei dann die beiden ebenen optischen Flächen auf beiden Seiten der Platte jeweils mindestens eine teiloder vollspiegelnde optische Fläche aufweisen. Wenn die optischen Flächen an mehreren parallel zueinander angeordneten Platten vorgesehen sind, ist es bevorzugt, wenn der Abstand der Platten durch mindestens einen planparallelen Abstandhalter definiert wird, der einen gleichen Temperaturausdehnungskoeffizient wie die Platten aufweist. Ein exakt identische Temperaturausdehnungskoeffizienten sind aber nicht erforderlich. Es ist ausreichend, wenn sich die Temperaturausdehnungskoeffizienten soweit gleichen, dass die tatsächlichen Temperaturausdehnungen in dem relevanten Temperaturbereich nicht übermäßig voneinander abweichen. Durch die Abstimmung der Temperaturausdehnungskoeffizienten wird eine Dejustierung der neuen Vorrichtung durch Wärmeausdehnungseinflüsse, die bei dem Einsatz in Verbindung mit Laserstrahlen hoher Energie nicht zu vermeiden sind, verhindert.

### KURZBESCHREIBUNG DER FIGUREN

Die Erfindung wird anhand einiger in den Zeichnungen dargestellter Ausführungsbeispiele näher erläutert und beschrieben. Dabei zeigt
**Fig. 1** in schematischer Darstellung eine erste Ausführungsform der erfindungsgemäßen Vorrichtung mit lichtstromspaltender und -homogenisierender Funktion,
**Fig. 2** in schematischer Darstellung eine Abwandlung der ersten Ausführungsform der erfindungsgemäßen Vorrichtung mit homogenisierender Funktion,
**Fig. 3** in schematischer Darstellung eine zweite Ausführungsform der erfindungsgemäßen Vorrichtung mit homogenisierender Funktion,
**Fig. 4** in schematischer Darstellung eine dritte Ausführungsform der erfindungsgemäßen Vorrichtung mit homogenisierender Funktion,
**Fig. 5** in schematischer Darstellung eine Variante der dritten Ausführungsform der erfindungsgemäßen Vorrichtung,
**Fig. 6** in schematischer Darstellung eine vierte Ausführungsform der erfindungsgemäßen Vorrichtung mit homogenisierender und lichtumlenkender Funktion,
**Fig. 7** in schematischer Darstellung eine Variante der vierte Ausführungsform der erfindungsgemäßen Vorrichtung gemäß Fig. 6 mit homogenisierender und lichtstromspaltender Funktion,
**Fig. 8** in schematischer Darstellung eine fünfte Ausführungsform der erfindungsgemäßen Vorrichtung mit homogenisierender Funktion,
**Fig. 9** ein vereinfachtes Schema der fünften Ausführungsform der erfindungsgemäßen Vorrichtung,
**Fig. 10** ein vereinfachtes Schema einer ersten Abwandlung der fünften Ausführungsform der erfindungsgemäßen Vorrichtung,
**Fig. 11** ein vereinfachtes Schema einer zweiten Abwandlung der fünften Ausführungsform der erfindungsgemäßen Vorrichtung,
**Fig. 12** in schematischer Darstellung eine Anordnung von zwei erfindungsgemäßen Vorrichtungen und
**Fig. 13** in schematischer Darstellung eine Anordnung einer erfindungsgemäßen Vorrichtung.

### FIGURENBESCHREIBUNG

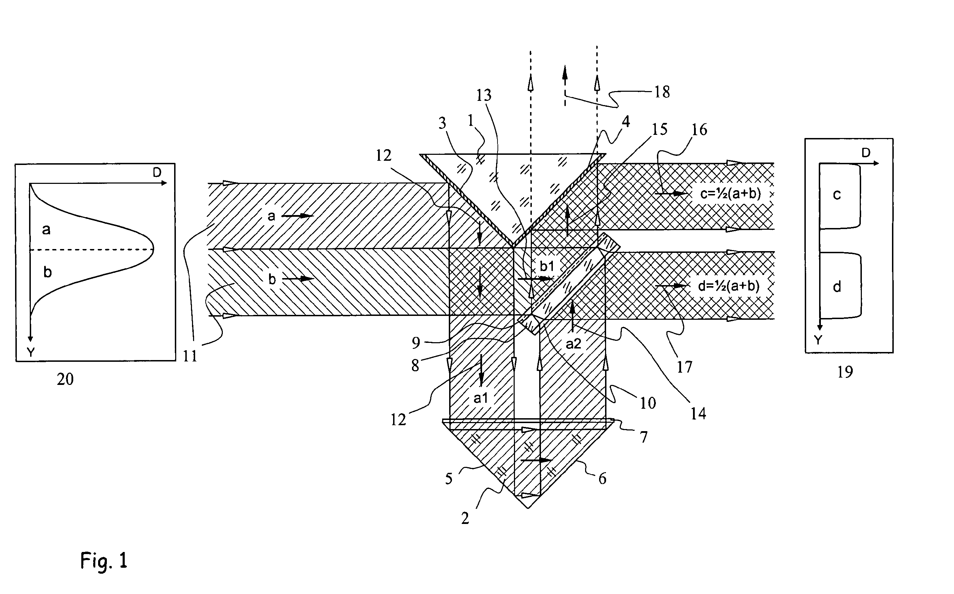

Die in **Fig. 1** dargestellte Vorrichtung dient dazu, einen Eingangslichtstrom **11** mit Gaußscher Verteilung **20** der Stromdichte in zwei gleiche Ausgangslichtströme **15**, **17** mit homogener Verteilung **19** der Stromdichte umzuformen. Die Vorrichtung weist zwei Prismen **1, 2** auf. Das in **Fig. 1** oben liegende Prisma **1** ist mit vollspiegelnden Schichten beschichtet, die nach außen gewandte vollspiegelnde optische Flächen **3** ausbilden. Am unteren Prisma **2** erfolgen Vollspiegelungen durch Totalreflexion an nach innen gewandten vollspiegelnden optischen Flächen **3**. Die hier nach oben gewandte Basisfläche des Prismas **2** ist mit einer Antireflexschicht **10** versehen. Die Vorrichtung umfasst weiterhin einen Strahlteiler **6**, der von einer teilverspiegelten optischen Fläche **9** auf einer transparenten Platte **8** ausgebildet ist. Die Rückfläche der Platte **8** ist mit einer Antireflexschicht **10** vergütet. Die teilverspiegelte optische Fläche **9** umfasst eine teilpolarisierende optische Multischicht, die bei unpolarisiertem Licht im Wesentlichen gleiche Transmissions- und Reflexionskoeffizienten aufweist.

Der einfallende Eingangslichtstrom **11** wird durch eine Vollspiegelung an der ersten vollspiegelnden optischen Fläche **3** des Prismas **1** die einen Querschnittanteil des Eingangslichtstroms **11** von etwa 50% erfasst und deshalb als Spiegelfläche eines Strahlspalters **6** wirkt, in zwei Lichtströme **12** und **13** aufgespalten. Der Lichtstrom **12** wird danach durch zwei Spiegelungen an den vollspiegelnden optischen Flächen **3** des Prismas **2** so umgelenkt, dass er an der teilverspiegelten optischen Fläche **9** den gleichen Bereich wie der Lichtstrom **13** abdeckt. Durch die Teilspiegelungen der Lichtströme **12** und **13** an der teilverspiegelten optischen Fläche **9** werden zwei Ausgangslichtströme **15** und **17** ausgebildet. Bei der Ausbildung des Ausgangslichtstroms **15** werden ein reflektierter Teilstrom als Stromdichteanteil des Lichtstroms **13** und ein durchgehender Teilstrom als Stromdichteanteil des Lichtstroms **12** in einer Richtung koaxial überlagert. Der zweite Ausgangslichtstrom **17** wird durch koaxiale Zusammenführung anderer Teilströme derselben Lichtströme **12** und **13**, nämlich einer reflektierten Komponente des Lichtstroms **12** und einer durchgehenden Komponente des Lichtstroms **13**, in einer anderen Richtung ausgebildet. Die entsprechenden Richtungen sind für die Teilströme außerhalb der Platte **8** definiert. Innerhalb der Platte **8** verändern sich die Richtungen nach dem Brechungsgesetz. Bei einer zu 50% reflektierenden optischen Fläche **9** umfassen die Ausgangslichtströme **15** und **17** Teilströme von jedem Lichtstrom **12, 13**, die jeweils einen Stromdichteanteil von etwa der Hälfte der Lichtströme **12, 13** aufweisen. Die Stromdichteanteile können wegen Lichtabsorption und -streuung an den spiegelnden Flächen um 1-2% kleiner als die rechnerische Hälfte sein.

Die Anzahl der Spiegelungen, einschließlich jeder Spiegelung an der teilverspiegelten optischen Fläche **9**, unterscheidet sich bei den jeweils überlagerten Teilströmen um zwei im Fall des Ausgangslichtstroms **15** und um vier im Fall des Ausgangslichtstroms **17**, d.h. jeweils um eine gerade ganze Zahl. Die zu den Ausgangslichtströmen **15, 17** überlagerten Teilströme sind damit in Bezug auf die Lage der ihnen zugrundeliegenden Lichtströme **12, 13** bei dem Eingangslichtstrahl **11** gegeneinander verschoben, nicht aber in Bezug auf die Verteilung ihrer Stromdichte über ihren Querschnitt gegeneinander seitenverkehrt. Dies ist Voraussetzung für die Homogenisierung der Verteilung der Stromdichte bei den Ausgangslichtströmen durch die koaxiale Zusammenführung.

Die optischen Wege der Teilströme, die überlagert werden, können durch Änderung der Winkel der Prismen **1, 2** zusammen mit einer Änderung der Neigung der Platte **8** oder/und durch Änderung des Abstandes zwischen den Prismen **1** und **2** auf eine vorbestimmte Längendifferenz eingestellt werden, um die Pulsdauer der Ausgangslichtströme **15, 17** bei einem gepulsten Eingangslichtstrom **11** zu kontrollieren. Eine Erhöhung der Pulsdauer bei den Ausgangslichtströmen **15, 17** geht aber zu Lasten der Homogenität der Verteilung der Stromdichte zu jedem Zeitpunkt während eines verlängerten Pulses.

Der Ausgangslichtstrom **15** wird durch eine Lichtstromausgabe **4**, die die zweite vollspiegelnde optische Fläche **3** des Prismas **1** umfasst, derart umgelenkt, dass die Ausgangslichtströme **15** und **17** in parallelen Richtungen nebeneinander ausgerichtet und getrennt voneinander ausgegeben werden.

Gegenüber der Gaußschen Verteilung **20** der Stromdichte des Eingangslichtstroms **11** weisen die Ausgangslichtströme **15** und **17** eine deutlich verbesserte Homogenität der Verteilung **19** ihrer Stromdichte über ihre Querschnitte auf. Die Verteilung **19** der Stromdichte D der Ausgangslichtströme **15** und **17** ist in **Fig. 1** im Vergleich zur entsprechenden Verteilung **20** der Stromdichte des Eingangslichtstroms **11** über einer Querschnittsachse y aufgetragen. Die Inhomogenität der Verteilung **19** für jeden Ausgangslichtstrom **15** und **17** beträgt nur 4% bei ca. 1,5%-igem Gesamtlichtstromverlust in der Vorrichtung gemäß **Fig. 1.** Im Vergleich mit bekanntem Verfahren sind die Intensitätsverluste mindestens um Faktor vier niedriger. Dank der Einstellbarkeit der Längendifferenz der optischen Wege der Teilströme kann die Pulsdauer bei einem gepulstem Eingangslichtstrom **11** bzw. Laserstrahl von 0,2 bis 6 ns kontrolliert erhöht werden.

Die teilverspiegelte optische Fläche **9** ermöglicht eine Verminderung der Interferenzeffekte für jedes Paar überlagerter Teilströme. Je größer die Kohärenzlänge des Eingangslichtstroms **11** ist, desto höher sind die Anforderungen an den Polarisationsgrad der strahlteilenden optischen Fläche **9**. Im Fall eines polarisierten Eingangslichtstroms **11** muss die Polarisationsebene um 45° gegenüber der Einfallsebene des Eingangslichtstroms **11** geneigt sein. Als alternative Lösung des Interferenzproblems bei erhöhten Kohärenzgrad kann ein Strahlteiler **6** vorgesehen werden, dessen teilverspiegelte optische Fläche **9** ein Feld aus einer Vielzahl nebeneinander angeordneter vollspiegelnder und volldurchlässiger Mikroflächen aufweist. In diesem Fall wird jeder der Teilströme, die überlagert werden sollen, als ein gerasterter Lichtstrom ausgegeben, dabei werden gerasterte Lichtströme aus verschiedenen Teilströmen nicht überlagert, d.h. in denselben Volumina zur Überdeckung gebracht.

Eine Variante der Ausführungsform der in **Fig. 1** gezeigten Vorrichtung ohne den von der zweiten vollspiegelnden optischen Fläche **3** gebildeten Spiegel (d.h. nur die in **Fig. 1** linke Hälfte des Prismas **1** ist vorhanden), ermöglicht die Ausgabe von zwei senkrecht zueinander ausgerichteten Ausgangslichtströmen **15'** und **17**, wobei der Ausgangslichtstrom **15'** die geradlinige Fortsetzung des Ausgangslichtstroms **15** hinter dem Strahlteiler **6** ist.

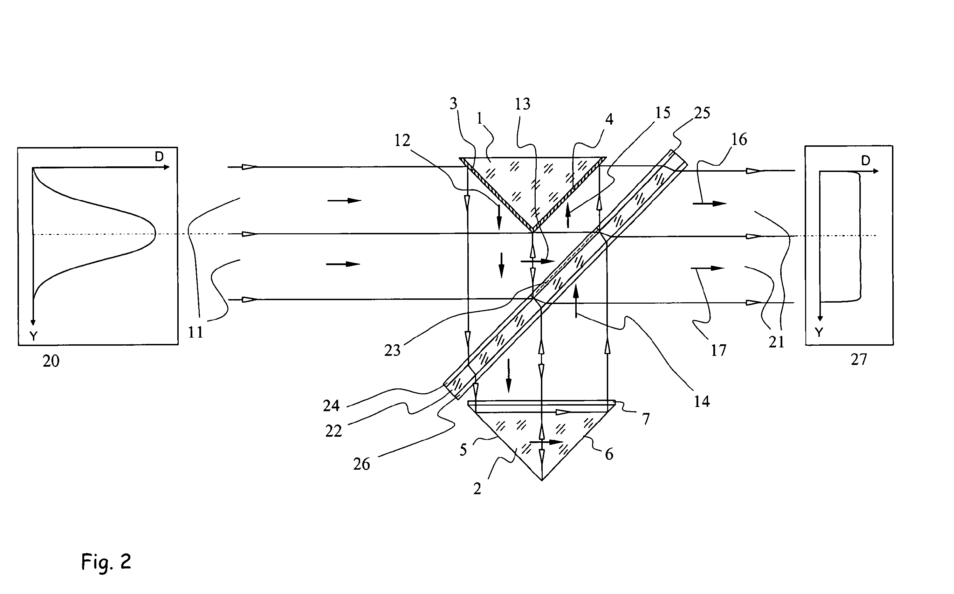

Von der Ausführungsform der Vorrichtung gemäß **Fig. 2** werden die Ausgangslichtströme **15, 17** in parallelen Richtungen direkt nebeneinander ausgerichtet, so dass ein zusammengefasster Ausgangslichtstrom **21** ausgebildet wird. Der Strahlteiler **6** dieser Ausführungsform basiert auf einer transparenten Platte **22** mit optischen Flächen, die sich über die Querschnitte der Lichtströme **12, 13** sowie der Ausgangslichtströme **15, 17** hinweg erstrecken. Ein Teilbereich, in dem eine teilpolarisierende Multischicht auf einer der optischen Flächen der Platte **22** vorgesehen ist, bildet die teilverspiegelte optische Fläche **9** des Strahlteilers **6** aus, die der hier unteren Hälfte des Querschnitts des Eingangslichtstroms **11** bzw. dem Lichtstrom **12** entspricht. Die verbleibenden Teilbereiche der gleichen Fläche sowie die Rückfläche der Platte **22** sind mit Antireflexschichen **10** vergütet.

Der zusammengefasste Ausgangslichtstrom **21** zeichnet sich durch eine homogene Verteilung **19** seiner Stromdichte über seinen Querschnitt aus. Die Inhomogenität der Verteilung **19** über den gesamten Querschnitt beträgt 4% bei 2,8%-igem Lichtstromverlust. Die weiteren Eigenschaften der beiden Vorrichtungen gemäß den **Fig. 2** und **Fig. 1** entsprechen einander.

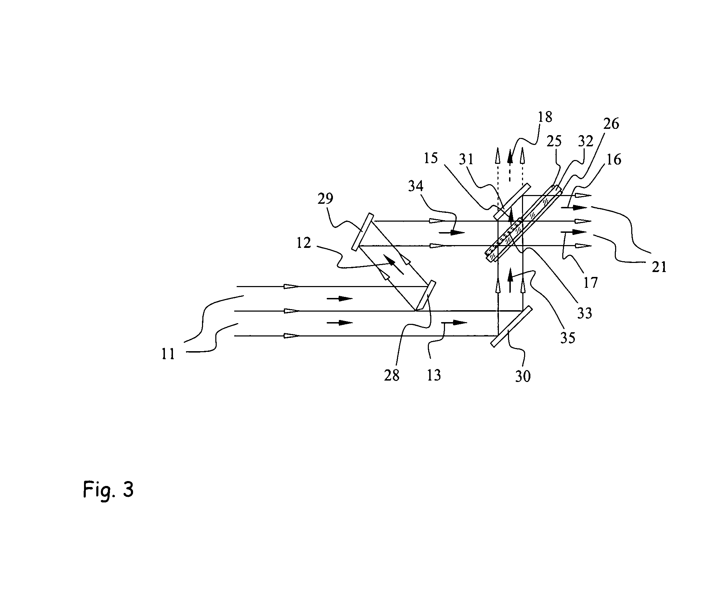

Die Vorrichtung gemäß **Fig. 3** dient wie diejenige gemäß **Fig. 2** dazu, den Eingangslichtstrom **11** in einen homogenen zusammengefassten Ausgangslichtstrom **21** zu konvertieren, der aus zwei gleichen homogenen parallelen Ausgangslichtströmen **15** und **17** zusammengesetzt ist. Um die Darstellung zu vereinfachen, ist die Wirkung der Brechung in der Platte **22** nicht angezeigt. Die Vorrichtung umfasst vier Spiegel, die vollspiegelnde optische Flächen **3** ausbilden, und einen Strahlteiler **6**, der ähnlich demjenigen der Ausführungsform der Vorrichtung gemäß **Fig. 2** ausgebildet ist. Die vollspiegelnde optische Fläche **3**, die den Eingangslichtstrom **11** in die zwei Lichtströme **12** und **13** aufspaltet, dient als Strahlspalter **5**. Die Lichtströme **12, 13** gelangen nach Umlenkungen an den weiteren vollspiegelnden optischen Flächen **3** zu dem Strahlteiler **6.** Der Strahlteiler **6** bewirkt die koaxiale Zusammenführung der Teilströme der Lichtströme **12** und **13** zu den Ausgangslichtströmen **15** und **17** auf die in Zusammenhang mit **Fig. 2** beschriebene Weise. Die Lichtstromausgabe **4** weist die vollspiegelnde optische Fläche **3** auf, mit deren Hilfe der Ausgangslichtstrom **15** parallel zum dem Ausgangslichtstrom **17** ausgerichtet wird, um den zusammengefassten Ausgangslichtstrom **21** an einem Ausgang auszugeben.

Die Anzahl der Spiegelungen, einschließlich jeder Spiegelung an einer teilverspiegelten optischen Fläche, bei den jeweils miteinander überlagerten Teilströmen unterscheiden sich um zwei im Fall des Ausgangslichtstroms **15,** und ist im Fall des Ausgangslichtstroms **17** gleich. Die optischen Wege der Teilströme, die miteinander überlagert werden, können durch Änderungen der Positionen und Neigungen der Spiegel auf eine vorbestimmte Längendifferenz eingestellt werden. Die betrachtete Ausführungsform ermöglicht es, die Längendifferenz in einem breiten Bereich zu variieren. Dieser Bereich unterscheidet sich von den Bereichen der anderen Ausführungsformen, derart, dass er neben positiven und negativen Werten auch den Wert null einschließt. Dies ermöglicht es, die Pulsdauer eines gepulsten Eingangslichtstroms **11** bei der Homogenisierung seiner Stromdichteverteilung unverändert zu erhalten. Die verbleibende Inhomogenität der Verteilung des gesamten Ausgangslichtstroms **21** beträgt wie zuvor 4% bei etwa 3%-igem Lichtstromverlust.

Eine Variante der in **Fig. 3** dargestellten Vorrichtung, deren Lichtstromausgaben **4** die letzte vollspiegelnde optische Fläche **3** nicht aufweisen, ermöglicht die Ausgabe von zwei homogenen, senkrechten zueinander ausgerichteten Ausgangslichtströmen **15'** und **17.** In dieser Variante dient die Vorrichtung als homogenisierender Strahlspalter mit steuerbarer Pulsdauererhöhung.

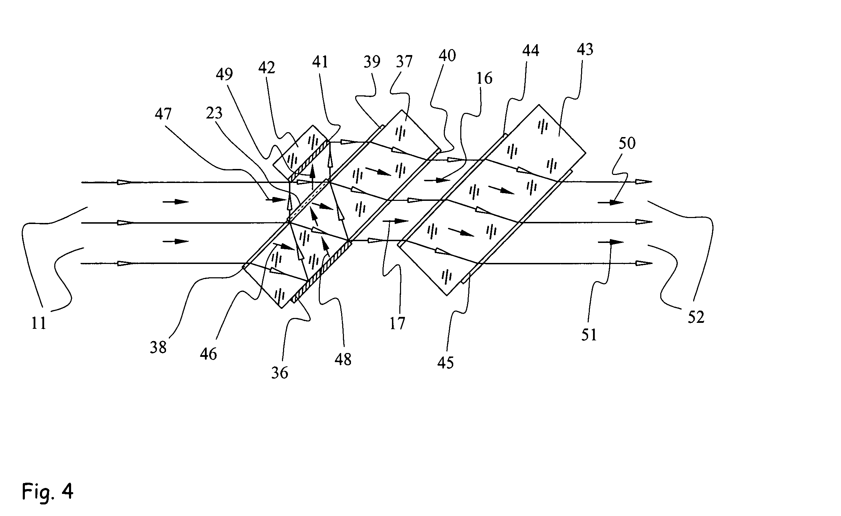

**Fig. 4** zeigt eine weitere Ausführungsform der erfindungsgemäßen Vorrichtung, die einen zusammengefassten homogenen Ausgangslichtstrom **21** ausgebildet. Die Vorrichtung weist parallel zueinander ausgerichtete spiegelnde optische Flächen auf. In einem Teilbereich ist eine vollspiegelnde Multischicht auf die Rückfläche der planparallelen transparenten Platte **22** aufgebracht, die dort eine vollspiegelnde optische Fläche **3** ausbildet. Die optischen Flächen der Platte **22** erstrecken sich über alle Querschnittsanteile des Eingangslichtstroms **11.** Auf der der vollspiegelnden Multischicht gegenüberliegenden Seite der Platte **22** befindet sich ein Teilbereich der zu 50% spiegelnden optischen Fläche **9,** die als Strahlteiler **6** und hier auch als Teil des Strahlspalters **5** dient. Die verbleibenden Teilbereiche der Platte **22**, die innerhalb der optischen Apertur liegen, sind mit Antireflexschichen **10** vergütet. Die Übergänge zwischen den spiegelnden bzw. teilverspiegelten und den durchlässigen Teilbereichen sollten möglichst "scharf"' sein, um eine genaue Aufspaltung und Zusammenführung der Lichtströme zu gewährleisten. Bei der betrachteten Ausführungsform sind die Übergangsbreiten an den Grenzen der Flächen **3** und **9** kleiner als 10µm. Die Lichtstromausgabe **4** basiert auf einer vollspiegelnden optischen Fläche **3,** zu deren Ausbildung eine optische Beschichtung auf ein Substrat **42** aufgebracht ist, und einer Kompensationsplatte **43,** die die geometrische Verschiebung der Ausgangslichtströme **15** und **17** gegenüber dem Eingangslichtstahl **11** ausgleicht. Die planparallelen Flächen der Kompensationsplatte **43** sind im Bereich der optischen Apertur mit Antireflexschichten **10** versehen. In der Vorrichtung sind die Abstände zwischen den Platten **22, 42** und **43** durch einen Satz von (in Fig. 4 nicht gezeigten) planparallelen Abstandhaltern definiert, die aus gleichem Material wie die Platten hergestellt sind.

Der Eingangslichtstrom **11** wird durch Spiegelung an der teilverspiegelten optischen Fläche **9** des Strahlteilers **6** bzw. an der vollspiegelnden optischen Fläche **3** an der Rückfläche der Platte **22** in die beiden zwei Lichtströme **12** und **13** aufgespalten. Der Lichtstrom **13** wird durch eine Spiegelung an der vollspiegelnden optischen Fläche **3** an der Rückfläche der Platte **22** zu dem Strahlteiler **6** gelenkt. Die Erzeugung der koaxial überlagerten Teilströme bzw. Ausgangslichtströme **15** und **17** folgt dem oben beschriebenen Verfahren gemäß **Fig. 2** oder **Fig. 3**. Die Anzahl der Spiegelungen bei den jeweils miteinander überlagerten Teilströmen unterscheidet sich im Fall des Ausgangslichtstroms **15** nicht und im Fall des Ausgangslichtstroms **17** um zwei. In der Ausführungsform der Vorrichtung gemäß **Fig. 4** definiert sich die Längendifferenz der optischen Wege der Teilströme, im Wesentlichen durch einen Neigungswinkel des planparallelen Systems gegenüber der Richtung des Eingangslichtstroms **11**. Hierbei ist der Neigungswinkel als Einfallwinkel des Eingangslichtstroms definiert. Bei einem größeren Neigungswinkel vermindert sich die Längendifferenz und infolgedessen wird die effektive Pulsdauer reduziert. Die Inhomogenität der Verteilung des gesamten Ausgangslichtstroms **21** beträgt wie zuvor 4% bei etwa 3%-iger Lichtstromverlust.

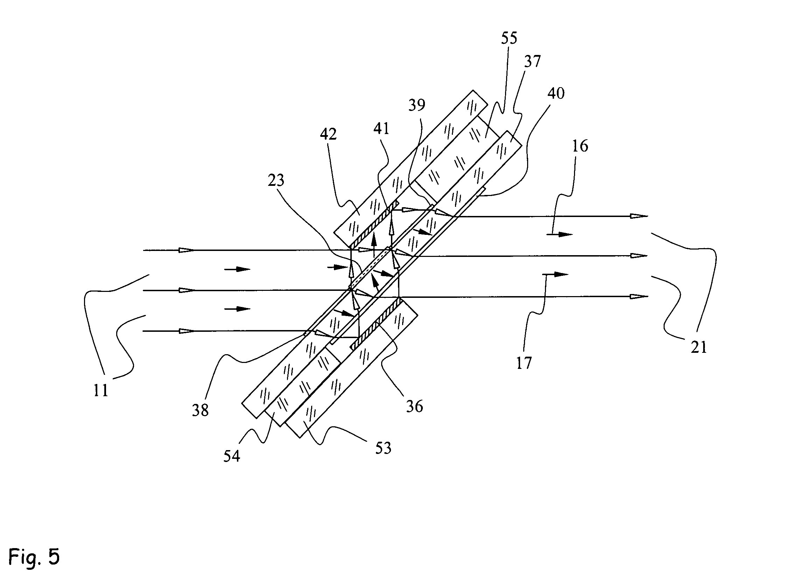

In **Fig. 5** ist eine Variante der Vorrichtung gemäß **Fig. 4** dargestellt. Die Vorrichtung umfasst hier keine Kompensationsplatte und unterscheidet sich durch eine getrennte Anordnung der spiegelnden Elemente auf mehreren Platten: die erste vollspiegelnde optische Fläche **3** ist auf ein separates Substrat **53** aufgebracht, und die Platte **22** ist nur mit der teilverspiegelten optischen Fläche **9** und den Antireflexschichten **10** versehen. Die präzisen Abstände zwischen den Platten **22** und **53** sowie zwischen den Platten **22** und **42** sind durch planparallele Abstandhalter **54** und **55** gewährleistet, die einen ähnlichen Temperaturausdehnungskoeffizient wie die Platten aufweisen. Dies ermöglicht einen Justierungsvorgang, der durch parallele Verschiebung der Platten **42** und **53** gegenüber der Platte **22** zusammen mit Änderung der Neigung des auf Platten basierenden Systems eine Einstellung der erforderlichen optischen Apertur erlaubt.

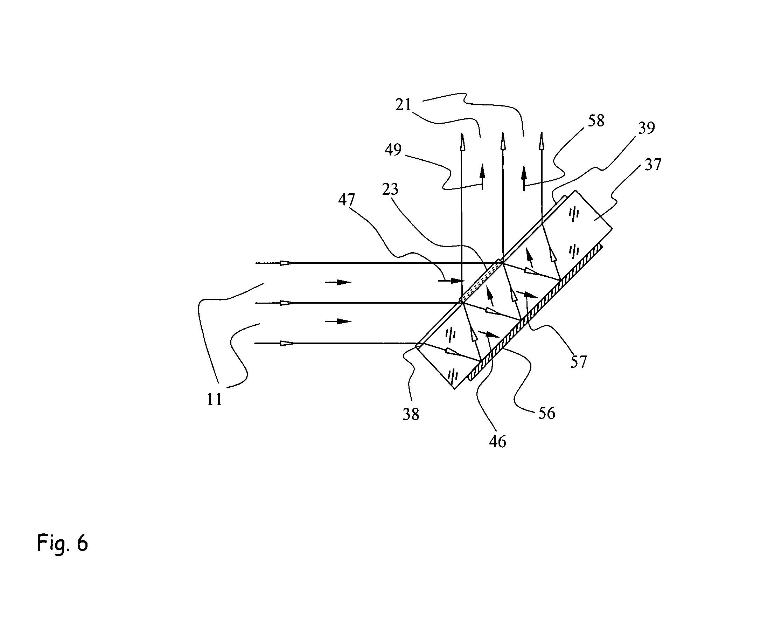

Die Ausführungsform der erfindungsgemäßen Vorrichtung, die in **Fig. 6** dargestellt ist, ermöglicht gleichzeitig homogenisierende und lichtumlenkende Funktionen. Die Vorrichtung umfasst eine einzige planparallele Platte **22**. Die erste optische Fläche der Platte **22** ist mit der teilverspiegelten optischen Fläche **9** und den Antireflexschichten **10** versehen; die zweite optische Fläche der Platte **22** ist mit der vollspiegelnden optischen Fläche **3** versehen, die sich hier über die gesamte Apertur der Spalt- und Ausgangslichtströme erstreckt. Die vollspiegelnde Fläche **3** hat dabei eine doppelte Funktion: sie dient zum einen als Umlenkspiegel für den Lichtstrom **13** und zum anderen als Lichtstromausgabe **4**, die den koaxial überlagerten Ausgangslichtstrom **17** parallel zu dem Ausgangslichtstrom **15** ausrichtet. Der zusammengefasste Ausgangslichtstrom **21** wird senkrecht zu dem Eingangslichtstrom **11** abgestrahlt. D.h. diese Vorrichtung dient als ein homogenisierender Umlenkspiegel. Die Vorrichtung weist bei 4%-iger Inhomogenität des gesamten Ausgangslichtstroms einen sehr geringen Lichtstromverlust von weniger als 1,5% auf.

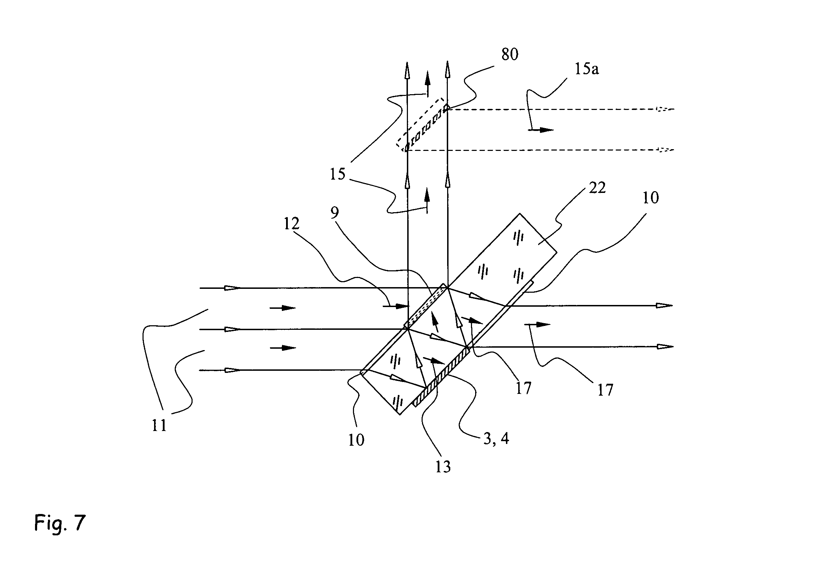

**Fig. 7** zeigt eine einfache Modifikation der Vorrichtung gemäß **Fig. 6**, um diese in einen homogenisierenden Strahlspalter umzuwandeln. Dazu wird die vollspiegelnde optische Fläche **3** nur über den Querschnitt des Lichtstroms **13** angeordnet, so dass der Ausgangslichtstrom **17** durch die Platte **22** hindurch weiter läuft, während der Ausgangslichtstrom **15** wie in **Fig. 6** umgelenkt wird. So werden die beiden Ausgangslichtströme **15** und **17** getrennt voneinander ausgegeben. Ein zusätzlicher Vollspiegel **80** kann dabei vorgesehen sein, um den Ausgangslichtstrom **15** ein weiteres Mal umzulenken und so die beiden getrennte Ausgangslichtströme **15** und **17** parallel zueinander auszurichten.

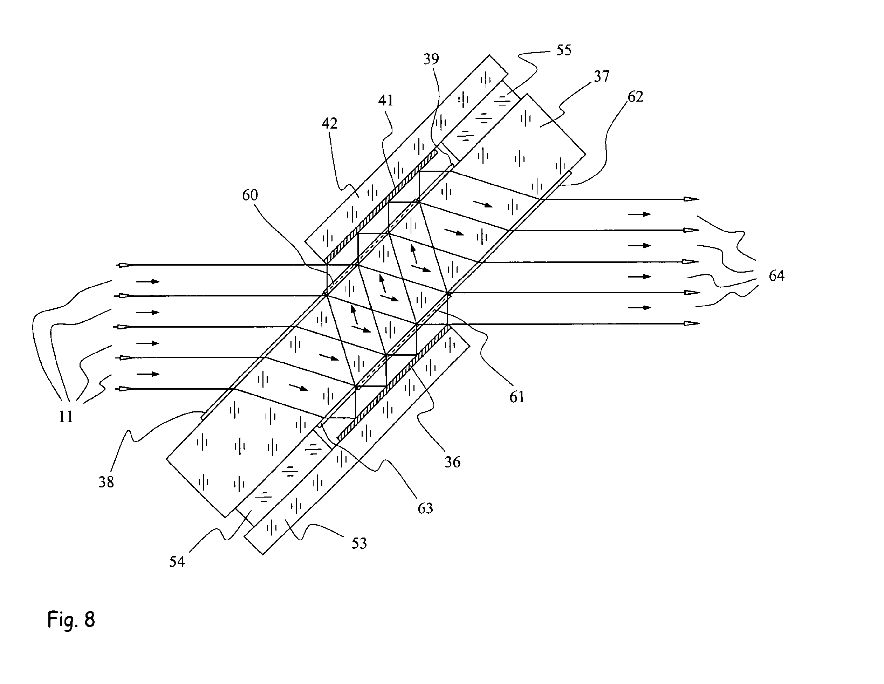

Mit der Ausführungsform der Vorrichtung gemäß **Fig. 8** kann die Verteilung der Stromdichte des Eingangslichtstroms noch weitergehend homogenisiert werden. Die Vorrichtung gemäß **Fig. 8** weist die planparallele transparente Platte **22** mit teilverspiegelten optischen Flächen **9** auf beiden Seiten auf, von denen jede 3/4 des Lichtstromsquerschnitts überdeckt. Die verbliebenen Teilbereiche der optischen Apertur sind mit Antireflexschichen **10** vergütet. Die weiteren Platten **42, 53** mit den vollspiegelnden optischen Flächen **3** sind mit Hilfe der Abstandhalter **54, 55** parallel zu der Platte **22** positioniert. Der Eingangslichtstrom **11** wird in diesem Fall in vier Lichtströme aufgespalten.

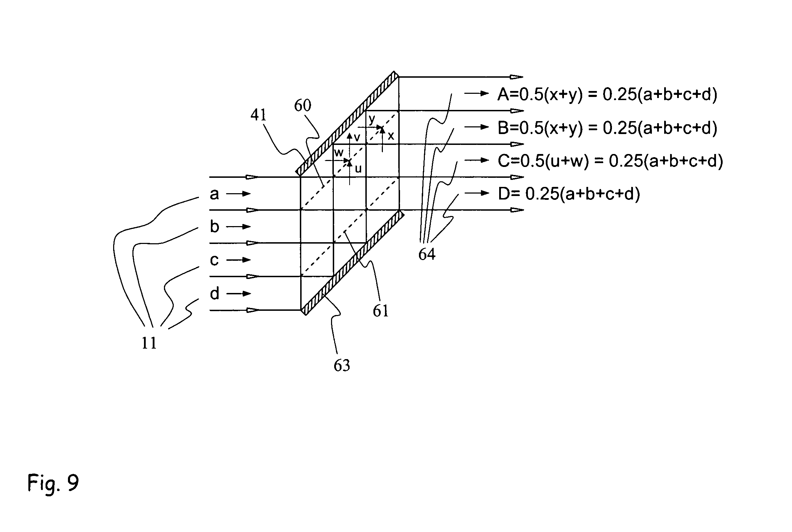

**Fig. 9** zeigt ein vereinfachtes Schema, das den Mechanismus der Lichtbehandlung durch die Vorrichtung gemäß **Fig. 8** ohne Betrachtung der Brechungswirkung erklärt. Der Eingangslichtstrom **11** wird durch mehrere Spiegelungen aufgespalten, die nur den Querschnittsanteil jeweils eines Lichtstroms a bis d an dem Eingangslichtstrom erfassen. Teilweise erfolgt diese Querschnittaufteilung an einer der teilverspiegelten optischen Fläche **9**, wie beispielsweise die Abspaltung des Lichtstroms **a**. Für einige Lichtströme erfolgt die Aufspaltung nicht unmittelbar am Eingang der Vorrichtung, sondern fast am Ende der Behandlungskette, z.B. werden die Lichtströme **b** und **c** endgültig erst an der teilverspiegelten optischen Fläche **9** bei der Erzeugung der Ausgangslichtströme **A** und **B** getrennt. Die Erzeugung der koaxial überlagerten Teilströme bzw. Ausgangslichtströme **A, B, C** und **D** erfolgt nach dem obenbeschriebenen Verfahren, das in **Fig. 2** und **Fig. 3** darstellt ist. Im vorliegenden Fall wird dieses Verfahren mehrfach hintereinander ausgeführt, wobei ein Ausgangslichtstrom einer vorhergehenden Durchführung des Verfahrens als Eingangslichtstrom bei einer nachfolgenden Durchführung des Verfahrens verwendet wird. So wird das Paar **v** der überlagerten Teilströme, die aus Anteilen der "inneren" Ausgangslichtströme **u** und **w** erzeugt wird, als ein weiterer"innerer" Ausgangslichtstrom **y** ausgegeben und als Eingangslichtstrom dem nächsten Zusammenführungsschritt mit Anteilen des Lichtstroms **x** zugeführt, um die Ausgangslichtströme **A** und **B** zu gewinnen. Am Ende werden die Teilströme der vier Lichtströme **a, b, c, d** zu vier Ausgangslichtströme **A, B, C, D** überlagert, die jeweils 1/4 der Stromdichte von jedem der Lichtströme umfassen. Dabei gelangen über die überlagerten Teilströme Stromdichteanteile von 1/2^{m}, wobei die ganze Zahl m hier größer als 1 ist, an jedem der Lichtströme **a, b, c** und **d** in jeden der Ausgangslichtströme **A, B, C** und **D**. Die Differenz der Anzahl der Spiegelungen bei den jeweils miteinander überlagerten Teilströmen beträgt 2, 4 oder 6. Die Inhomogenität der Verteilung des gesamten Ausgangslichtstroms **21** beträgt 2% bei etwa 3%-igem Lichtstromverlust.

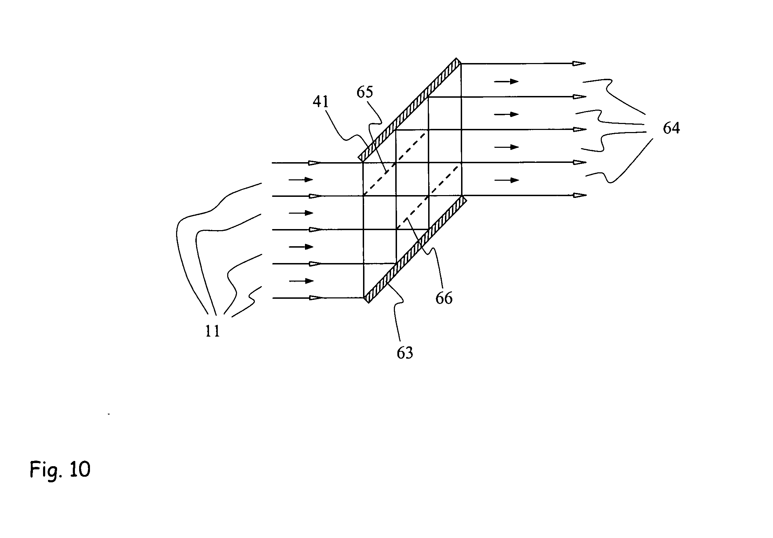

In **Fig. 10** ist ein vereinfachtes Schema einer Variante der Vorrichtung gemäß **Fig. 8** bzw. **Fig. 9** mit kleineren teilverspiegelten optischen Flächen **9** dargestellt, von denen jede nur ein Hälfte des Lichtstromsquerschnitts überdeckt. Die Lichtbehandlungsvorgänge sowie die Funktionsfähigkeit der Vorrichtung bleiben dennoch fast unverändert.

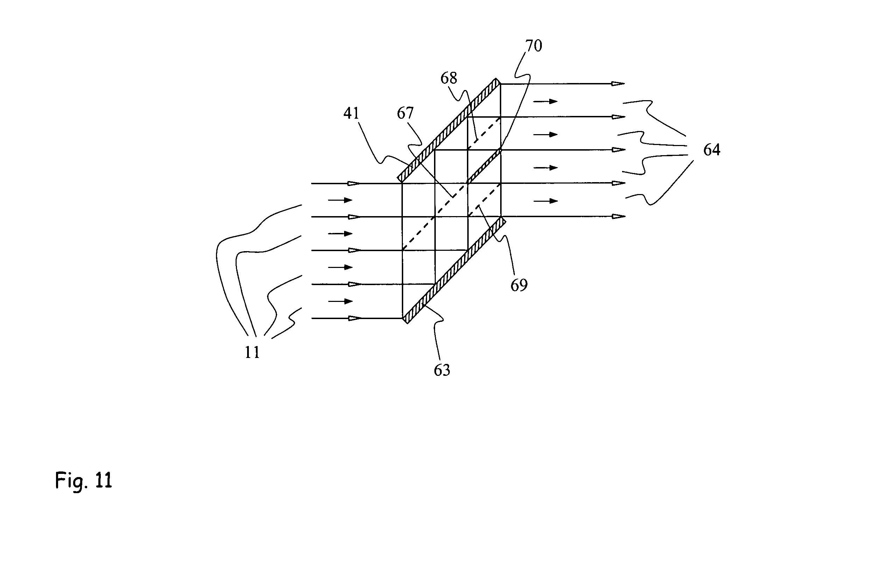

Die Vorrichtung gemäß **Fig. 11**, die ein vereinfachtes Schema einer weiteren Variante der Vorrichtung gemäß **Fig. 8** bzw. **Fig. 9** wiedergibt, zeigt ein System von fünf planparallelen spiegelnden Flächen. Diese umfassen zwei äußere vollspiegelnde optische Flächen **3**, von denen jede 3/4 des Lichtstromsquerschnitts überdeckt, eine mittlere teilverspiegelte optische Fläche **9,** die 1/2 des Lichtstromsquerschnitts überdeckt, und zwei seitliche teilverspiegelte optische Flächen **9,** von denen jede nur 1/4 des Lichtstromquerschnitts überdeckt, sowie eine mittlere vollspiegelnde optische Fläche **3** gleicher Größe, die beidseitig voll spiegelt. Diese spiegelnden Flächen sind als ein "hybrides" Schichtsystem wie bei der Vorrichtung gemäß **Fig. 8** auf mehrere (in **Fig. 11** nicht gezeigte) Platten aufgebracht. Die Lichtstrombehandlung erfolgt nach dem bereits oben beschriebenen Verfahren zuerst mit zweifacher Aufspaltung des Eingangslichtstroms **11** an der mittleren teilverspiegelten optischen Fläche **9**. Die entstehenden Ausgangslichtströme des ersten Behandlungsvorgangs werden getrennt in die zweite Stufe des Verfahrens übernommen. Hier erfolgt eine weitere 2-fache Aufspaltung in weitere Lichtströme an den seitlichen teilverspiegelten optischen Flächen **9**. Die überlagerten Teilströme werden als vier Ausgangslichtströme ausgegeben, die einen zusammengefassten Ausgangslichtstrom **21** ausbilden.

Jedes der oben beschriebenen Verfahren, das auf einer der Vorrichtungen gemäß den **Fig. 8** bis **10** basiert, ermöglicht bei einer einfachen Abwandlung, z.B. durch Neigung oder Behebung der vollspiegelnde Lichtstromausgabe (nicht in diesen Figuren gezeigt), auch die Funktionalität eines homogenisierenden Strahlteilers, der mehrere Ausgangsstrahlen getrennt voneinander ausgibt. Die Vorrichtungen weisen eine wesentlich erhöhte mechanische und thermische Beständigkeit, sowie die Fähigkeit zur kontrollierten Erhöhung der Pulsdauer eines gepulsten Eingangslichtstroms auf.

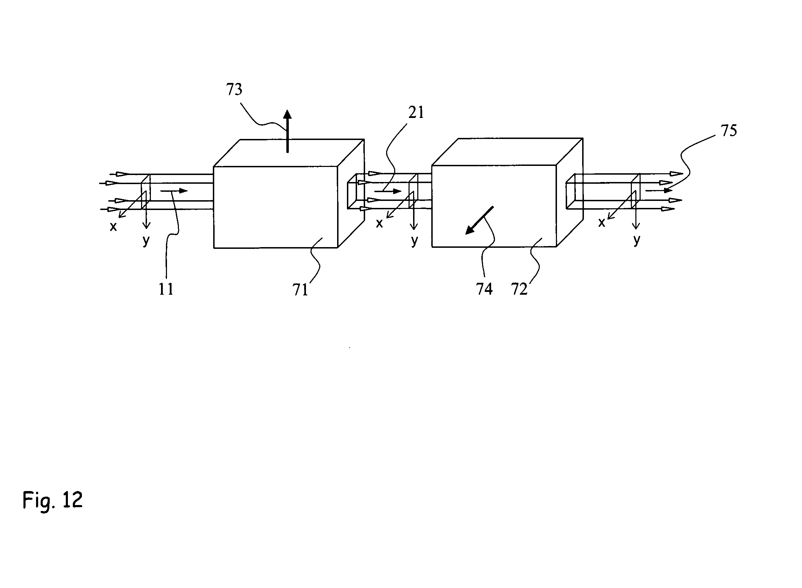

**Fig. 12** zeigt eine Anordnung von zwei erfindungsgemäßen Vorrichtung, mit der das beschriebene Verfahren der Lichtstrombehandlung zweimal hintereinander ausgeführt wird, wobei ein Ausgangslichtstrom **21** von einer ersten Durchführung des Verfahrens mit Hilfe einer ersten Vorrichtung **71** als Eingangslichtstrom für eine zweite Durchführung des Verfahrens in eine zweite Vorrichtung **72** eingeführt wird. Jede Trennebene, entlang der der Eingangslichtstrom **11** in der erste Vorrichtung **71** aufgespalten wird, verläuft parallel zu der Ebene, die von der Richtung des Eingangslichtstroms **11** und einem Pfeil **73** in y-Richtung aufgespannt wird. Bei der zweiten Vorrichtung **72** liegt jede Trennebene senkrecht zu jeder Trennebene der ersten Vorrichtung **71**, so dass sie durch die Richtung des Lichtstroms **21** und einen Pfeil **74** in x-Richtung definiert wird. Auf diese Weise wird ein in beide Richtungen x und y homogenisierter Ausgangslichtstrom **75** erzeugt.

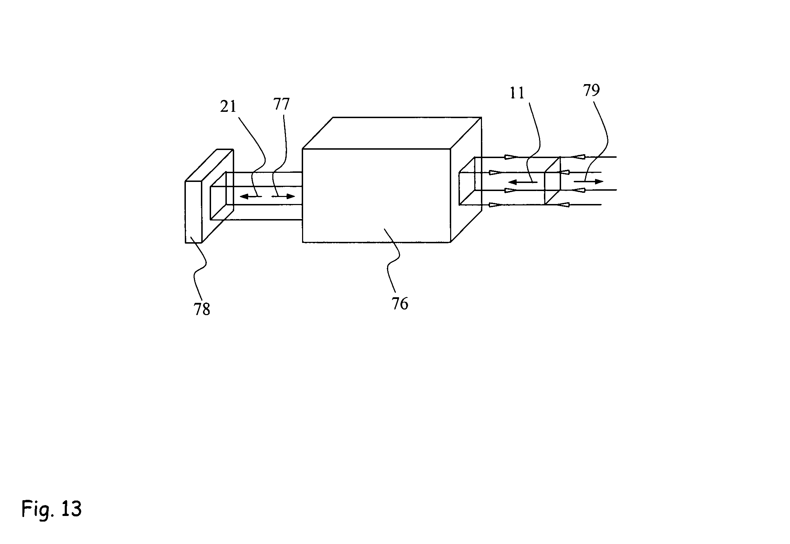

**Fig. 13** zeigt eine Anordnung einer erfindungsgemäßen Vorrichtung, bei der das erfindungsgemäße Verfahren innerhalb eines Resonators eines Lasers oder eines Laserverstärkers durchgeführt wird. Hier wird der Eingangslichtstrom **11** in einer Vorrichtung Einheit **76** nach dem oben beschriebenem Verfahren homogenisiert und als Ausgangslichtstrom **21** ausgegeben. Ein Spiegel **78** reflektiert den Ausgangslichtstrom **21** so zurück, dass er koaxial zu dem Ausgangslichtstrom **21** als Eingangslichtstrom **77** in die Lichtstromausgabe der Vorrichtung **76** einfällt. Nach einem zweitem Behandlungsvorgang in derselben Vorrichtung **76** wird er als rückläufiger Ausgangslichtstrom **79** ausgegeben. Die Anordnung hat damit die Funktion eines homogenisierenden Spiegels, so dass sich ein Laser oder Laserverstärker, der diese Anordnung als Resonatorspiegel umfasst, durch einen homogenisierten Ausgangslaserlichtstrom auszeichnet.

### BEZUGSZEICHENLISTE

- 1: Prisma
- 2: Prisma
- 3: Vollspiegelnde optische Fläche
- 4: Lichtstromausgabe
- 5: Strahlspalter
- 6: Strahlteiler
- 8: Platte
- 9: Teilverspiegelte optische Fläche
- 10: Antireflexschicht
- 11: Eingangslichtstrom
- 12: Lichtstrom
- 13: Lichtstrom
- 15: Ausgangslichtstrom
- 17: Ausgangslichtstrom
- 19: Verteilung
- 20: Verteilung
- 21: Zusammengefasster Ausgangslichtstrom
- 22: Platte
- 42: Substrat
- 43: Kompensationsplatte
- 53: Substrat
- 54: Abstandhalter
- 55: Abstandhalter
- 71: Vorrichtung
- 72: Vorrichtung
- 73: Pfeil
- 74: Pfeil
- 75: Ausgangslichtstrom
- 76: Vorrichtung
- 77: Eingangslichtstrom
- 78: Spiegel
- 79: Ausgangslichtstrom
- 80: Vollspiegel

## Patentansprüche

1. Verfahren zur Verteilung der Stromdichte eines Eingangslichtstroms, wobei der Eingangslichtstrom in mindestens zwei Lichtströme aufgespalten wird, die verschiedene Querschnittsanteile des Eingangslichtstroms umfassen, und wobei ein erster Ausgangslichtstrom ausgegeben wird, zu dem zwei Teilströme, die jeweils einen Stromdichteanteil mindestens eines Lichtstroms umfassen, durch eine Teilspiegelung in einer Richtung koaxial überlagert werden, **dadurch gekennzeichnet, dass** mindestens ein weiterer Ausgangslichtstrom (17) ausgegeben wird, zu dem zwei weitere Teilströme, die jeweils weitere Stromdichteanteile derselben Lichtströme (12, 13) wie bei dem ersten Ausgangslichtstrom (15) umfassen, durch dieselbe Teilspiegelung in einer weiteren Richtung koaxial überlagert werden.

2. Verfahren nach Anspruch 1, **dadurch gekennzeichnet, dass** der erste Ausgangslichtstrom (15) und der mindestens eine weitere Ausgangslichtstrom (17) getrennt voneinander ausgegeben werden.

3. Verfahren nach Anspruch 1, **dadurch gekennzeichnet, dass** der erste Ausgangslichtstrom (15) und mindestens ein weiterer Ausgangslichtstrom (17) in parallelen Richtungen nebeneinander ausgerichtet werden.

4. Verfahren nach einem der Ansprüche 1 bis 3, **dadurch gekennzeichnet, dass** mindestens ein Lichtstrom (12) durch eine Spiegelung, die nur den Querschnittsanteil des Lichtstroms (12) an dem Eingangslichtstrom (11) erfasst, von dem Eingangslichtstrom (11) abgespalten wird, wobei die Spiegelung an derselben teilverspiegelten optischen Fläche (9) wie die Teilspiegelung oder an einer anderen teilverspiegelten oder vollspiegelnden optischen Fläche erfolgt.

5. Verfahren nach einem der Ansprüche 1 bis 4, **dadurch gekennzeichnet, dass** der Eingangslichtstrom (11) in n Lichtströme (12, 13) aufgespalten wird, wobei n eine gerade ganze Zahl ist, und dass Teilströme der n Lichtströme (12, 13) zu n Ausgangslichtströme (15, 17) überlagert werden, die jeweils einen Teilstrom von jedem Lichtstrom (12, 13) umfassen.

6. Verfahren nach einem der Ansprüche 1 bis 5, **dadurch gekennzeichnet, dass** sich die Anzahl der Spiegelungen, einschließlich jeder Spiegelung an einer teilverspiegelten optischen Fläche (9), bei den jeweils miteinander überlagerten Teilströmen nicht oder um eine ganze gerade Zahl unterscheidet.

7. Vorrichtung zur Verteilung der Stromdichte eines Eingangslichtstroms, mit einem mindestens eine Spiegelfläche aufweisenden Strahlspalter, der den Eingangslichtstrom in mindestens zwei Lichtströme aufspaltet, die verschiedene Querschnittsanteile des Eingangslichtstroms umfassen, und mit einer Lichtstromausgabe, die einen ersten Ausgangslichtstrom ausgibt, zu dem ein eine teilverspiegelte optische Fläche aufweisender Strahlteiler zwei Teilströme, die jeweils einen Stromdichteanteil mindestens eines Lichtstroms umfassen, in einer Richtung koaxial überlagert, **dadurch gekennzeichnet, dass** die Lichtstromausgabe (4) mindestens einen weiteren Ausgangslichtstrom (17) ausgibt, zu dem derselbe Strahlteiler (6) zwei weitere Teilströme, die jeweils weitere Stromdichteanteile derselben Lichtströme (12, 13) wie bei dem ersten Ausgangslichtstrom (15) umfassen, in einer weiteren Richtung koaxial überlagert.

8. Vorrichtung nach Anspruch 7, **dadurch gekennzeichnet, dass** die Lichtstromausgabe (4) getrennte Ausgänge für den Ausgangslichtstrom (15) und den weiteren Ausgangslichtstrom (17) aufweist.

9. Vorrichtung nach Anspruch 7, **dadurch gekennzeichnet, dass** die Lichtstromausgabe (4) mindestens eine vollspiegelnde optische Fläche aufweist, die den ersten Ausgangslichtstrom (15) und mindestens einen weiteren Ausgangslichtstrom (17) in parallelen Richtungen nebeneinander ausrichtet.

10. Vorrichtung nach einem der Ansprüche 7 bis 9, **dadurch gekennzeichnet, dass** die mindestens eine Spiegelfläche des Strahlspalters (5) nur den Querschnittsanteil eines der Lichtströme erfasst, wobei die Spiegelfläche des Strahlspalters (5) die teilverspiegelte optische Fläche (9) des mindestens einen Strahlteilers (6) oder eine teilverspiegelte optische Fläche (9) eines weiteren Strahlteilers (6) ist.

11. Vorrichtung nach einem der Ansprüche 7 bis 10, **dadurch gekennzeichnet, dass** mindestens ein polarisierender oder teilpolarisierender Strahlteiler (6) und/oder mindestens ein Strahlteiler (6) vorgesehen ist, dessen teilverspiegelte optische Fläche (9) ein Feld aus einer Vielzahl nebeneinander angeordneter vollspiegelnder und volldurchlässiger Mikroflächen aufweist.

12. Vorrichtung nach einem der Ansprüche 7 bis 11, **dadurch gekennzeichnet, dass** alle teilverspiegelten optischen Flächen (9) und alle vollspiegelnden optischen Flächen (3) parallel zueinander ausgerichtet sind.

13. Vorrichtung nach einem der Ansprüche 7 bis 12, **dadurch gekennzeichnet, dass** eine teil- oder vollspiegelnde optische Fläche (9 bzw. 3) ein Teilbereich einer ebenen optischen Fläche ist, die sich selbst über die Querschnittsanteile sämtlicher Teil- und Ausgangslichtströme (15, 17) erstreckt, wobei sie in dem Teilbereich der teilverspiegelten oder vollspiegelnden optischen Fläche (9 bzw. 3) und in einem angrenzenden Teilbereich Beschichtungen mit unterschiedlichen Reflektionskoeffizienten aufweist.

14. Vorrichtung nach einem der Ansprüche 7 bis 13, **dadurch gekennzeichnet, dass** alle teil- oder vollverspiegelten optischen Flächen (9 bzw. 3) an einer planparallelen Platte (22) ausgebildet sind.

15. Vorrichtung nach einem der Ansprüche 7 bis 14, **dadurch gekennzeichnet, dass** optische Flächen an mindestens zwei parallel zueinander angeordneten Platten (22, 42, 53) vorgesehen sind, deren Abstand durch mindestens einen planparallelen Abstandhalter (54, 55) definiert ist, der einen gleichen Temperaturausdehnungskoeffizient wie die Platten (22, 42, 53) aufweist.

16. Anordnung mit einer Vorrichtung nach einem der Ansprüche 7 bis 15 in Verbindung mit einem Spiegel, **dadurch gekennzeichnet, dass** der Spiegel (78) mindestens einen aus der Lichtstromausgabe (4) der Vorrichtung (76) austretenden Ausgangslichtstrom (15, 17, 21) in die Lichtstromausgabe (4) zurück reflektiert

17. Laser oder Laserverstärker mit einem Resonator, der eine Anordnung nach Anspruch 16 aufweist.
